(19) Europäisches Patentamt
European Patent Office
Office européen des brevets

(11) **EP 3 413 258 A1**

(12) **EUROPEAN PATENT APPLICATION**
published in accordance with Art. 153(4) EPC

(43) Date of publication:
**12.12.2018 Bulletin 2018/50**

(21) Application number: **16899023.2**

(22) Date of filing: **27.04.2016**

(51) Int Cl.:
***G06Q 30/06*** (2012.01)

(86) International application number:
**PCT/CN2016/080334**

(87) International publication number:
**WO 2017/181436 (26.10.2017 Gazette 2017/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.04.2016 CN 201610244498**

(71) Applicant: **Global Prestige Information
Technology Co., Ltd.
Shuozhou, Shanxi 036000 (CN)**

(72) Inventors:
• **LI, Jun
Shuozhou City
Shanxi 036000 (CN)**
• **LI, Jingyu
Shuozhou City
Shanxi 036000 (CN)**

(74) Representative: **Gulde & Partner
Patent- und Rechtsanwaltskanzlei mbB
Wallstraße 58/59
10179 Berlin (DE)**

(54) **OBJECT TRADING PLATFORM BASED ON TRADE CURRENCY**

(57)     The present invention relates to a JYB-based barter transaction platform. On the platform, trades between sellers and buyers are denominated in JYB, which is used to settle all objects and services purchased or sold on the platform. The JYB is a trade measuring currency instead of a circulation currency, and cannot be directly exchanged with a circulation currency. Only when the amount of JYB is insufficient during a trade, can the JYB difference be supplemented by a circulation currency at the conversion rate; in the case of regular settlement of circulation currency, the barter transaction platform collects the amount of circulation currency it has received and refund it to users by the conversion rate. JYB can replace any circulation currency to achieve real-time barter trade.

FIG1

**Description**

**Technical Field**

The present invention relates to a JYB-based barter transaction platform, an aspect in the field of finance and e-commerce.

**Background**

With the development of mobile Internet technologies, transaction platforms often have their digital currencies.

I. Existing digital currencies and their defects are enumerated as follows:

1. Forms of existing digital currencies are enumerated as follows:

1.1 Currencies generated by a preset program in computers, for example, bitcoin;
1.2 Currencies generated by exchanging from any circulation currency (i.e., the fiat money of a country), for example: Alipay, Wechat balance, etc.
1.3 Any amount of circulation currency encrypted by any encryption technology to help online settlement, for example: balance in any online banking or bank App;
1.4 Any digital currency developed in a way similar to the distributed ledger system used for bitcoin, and intended to replace paper money;
1.5 In-game virtual coins, usually used to purchase virtual goods in games and can be bought with circulation currency.

2. Defects of existing digital currencies are enumerated as follows:

2.1 If a digital currency generated by computers, as cited in the Example 1.1, cannot be linked to a circulation currency as a carrier, its value will be only limited to a small group.
2.2 The digital currencies of Example 1.2-1.4 are only different forms to represent circulation currencies although they have overcome some defects of paper money (such as high cost of printing, transportation and management, counterfeit money, security problem and difficulty in determining cash amount); however, they fail to overcome other defects of circulation currency (such as funds shortfall, high financing cost, triangle debt and financial risk that endanger enterprises) and illegal transaction, money laundering and speculative actions are produced when they are exchanged with cashes.
2.3 The in-game virtual currency of the Example 1.5 only applies to transactions in games, not extensively used or popularized.

II. Existing barter transaction platforms and their defects are enumerated as follows:

1. Existing barter transaction platforms are enumerated as follows:

1.1. Barter transaction platforms, for example: www.ewu.cc;
1.2. Shopping transaction platforms, for example: Taobao, JD, eBay, Amazon, etc..

2. Defects of existing barter transaction platforms are enumerated as follows:

2.1 Neither real time barter trading can be achieved nor can materials in urgent need be obtained;
2.2 The existing payment methods for online sale are dependent of circulation currency and online sales have not overcome the defects of circulation currency;
2.3 There are many risks in respect of, such as, international trade, exchange rate and foreign exchange management.

**Summary of the Invention**

In accordance with the present invention, the previous defects can be overcome. The present invention relates to a JYB-based barter transaction platform. In the present invention, online real-time transaction can be achieved without any circulation currency and transaction is achieved in the form of shopping. On the platform, transactions between sellers and buyers are denominated in JYB, which is used to settle all objects and services purchased or sold on the platform. The JYB is a transaction measuring currency instead of a circulation currency, and cannot be directly exchanged with any circulation currency. Only when the amount of JYB is insufficient during a transaction, can the JYB difference be supplemented by a circulation currency at the conversion rate; in the case of regular settlement of a circulation currency, the barter transaction platform collects the amount of the circulation currency it has received and refunds it by the conversion rate to users. In the present invention, the circulation currency of each country is settled in its country, which can avoid risks about exchange rates and foreign exchange management.

To achieve the purposes, the present invention is technically planned as follows:

The present invention provides a JYB-based barter transaction platform, comprising multiple clients and a platform server, where:

the multiple clients are connected to the platform server;
the platform server comprises a database, an object exhibition module and a settlement module;
the database stores the identity information of all users and information of all objects;
the identity information includes the ID, name, address and contact details of each registered user;
the object information include physical object and its pictures, specification, model, parameters, unit of measure, quantity, price, collateral and its pictures, specification, model, parameters, unit of measure, quantity, price, service and its unit of measure, quantity, price, names of debtor and creditor, and amount;
the object exhibition module is configured to acquire the information of all users and objects from the database, send the same to clients and the clients display the received information in a preset manner; and
the settlement module stores the JYB account of user, the JYB account for transit of the platform and the JYB account for service fee of the platform; the JYB account of user contains the ID, JYB balance, credit limit, credit balance, collateral limit and collateral balance of the user; the JYB account for transit of the platform contains the JYB balance owned by the platform; the JYB account for service fee of the platform contains the service fee balance denominated in JYB of the platform.

Preferably, the barter transaction platform includes an online banking server:

The online banking server is connected to the platform server;
The online banking server stores the circulation currency account of user, the circulation currency account for transit and the circulation currency account for service fee of the platform; the circulation currency account of user contains the ID of the user; the circulation currency account for transit of the platform stores the platform ID and circulation currency balance; the circulation currency account of the platform contains the Service fee ID.

Preferably, JYB is generated in the settlement module in accordance with the following rules:

The user generates collateral balance denominated in JYB in the settlement module by using the collateral tradable asset amount;
The user generates credit balance denominated in JYB in the settlement module by using its credit limit;
The user generates JYB balance in the settlement module by using the amount owed to it as a creditor; and
The user supplements JYB difference at the conversion rate by using an amount of circulation currency and then generates JYB balance in the settlement module.

Preferably, JYB is transferred out in the settlement module in accordance with the following rules:

The JYB is a transaction measuring currency instead of a circulation currency, wherein the conversion rate of the JYB to a circulation currency is generated in the settlement module according to the price ratio of JYB reference country to other countries; the platform sets the ratio of JYB to the price of JYB reference country as 1:1; JYB cannot be directly exchanged for a circulation currency, only when the amount of JYB is insufficient during a transaction, can the JYB difference be supplemented at the conversion rate by a circulation currency. The regular settlement in each subsystem can only be denominated in the circulation currency of the country where the subsystem is designed for. Within a settlement cycle, the subsystem service fee denominated in the JYB is converted to the circulation currency and then deducted from the circulation currency account of the subsystem. In each subsystem, the remaining amount of circulation currency in that subsystem shall be returned to users according to the share of each user in the total amount of JYB

Preferably, for the settlement module, JYB is transferred from an account in accordance with the following rules:

To transfer the fifth amount of JYB from the JYB account of user, first it is required to judge whether the JYB balance in the account is larger than the the fifth amount. If so, the the fifth amount is deducted from the JYB balance; if not, the difference is deducted from the credit balance and collateral balance; when the sum of credit balance and collateral balance is insufficient, circulation currency is exchanged at the conversion rate to cover the difference.

Preferably, for the settlement module, JYB is transferred into an account in accordance with the following rules: To transfer the sixth amount of JYB into the JYB account of user, if the sum of credit balance and collateral balance in the account is equal to the sum of credit limit and collateral limit for the account, the sixth amount is transferred into the JYB balance of the account; if the sum of credit balance, collateral balance and the sixth amount is larger than the sum of credit limit and collateral limit, it is prioritized to increase the credit balance and collateral balance so that they are equal to credit limit and collateral balance respectively by use of the sixth amount, and the remaining part of the sixth amount is transferred to JYB balance of the six user.

Preferably, a physical object transaction between a seller and a buyer is processed in the settlement module in the following steps:

Step 1: acquire the price of the physical object and record it as the seventh transaction price; calculate the the seventh transaction service fee by use of the seventh transaction price;

Step 2: transfer an amount of JYB equal to sum of the seventh transaction price and the seventh transaction service fee from the JYB account of buyer in accordance with the transfer rules, and transfer the same to the JYB account for transit of the platform as the deposit;

Step 3: upon the transaction is completed, transfer an amount of JYB equal to difference between the seventh transaction price and the seventh transaction service fee from the JYB account for transit of the platform in accordance with the transfer-out rules, and transfer the same to JYB account of seller and transfer the remaining transaction deposit to the JYB account for service fee of the platform in accordance with the transfer-in rules.

Preferably, in the Step 2, when online banking server judges that the the eighth amount of circulation currency is transferred from the circulation currency account of user in respect of the eighth ID to the circulation currency account for transit of the platform, the online banking server sends the eighth ID and the eighth amount to the settlement module; the settlement module transfers an amount of JYB equal to the quotient produced from division of the the eighth amount and the conversion rate into the currency account of user in respect of the user ID by following the transfer-in rules;

Preferably, a collateral transaction between a seller and a buyer is processed in the settlement module in the following steps:

Step 1: acquire the collateral value of the ninth user and record it as the ninth value;

Step 2: transfer an amount of JYB equal to a certain ratio of the ninth value from the JYB account for transit of the platform, and transfer the same to the JYB account of the the ninth user as the collateral balance;

Step 3, set a price decrease cycle and price of collateral in each cycle is forced to be decreased from the last cycle at a certain discount; when the tenth user buys the collateral at the tenth value and if the tenth value is larger than or equal to collateral limit, the collateral limit of the the ninth user becomes zero and the difference between the the tenth value and the tenth transaction service fee is transferred into the JYB account of the tenth user; if the tenth value is smaller than the collateral limit, the difference by deducting the tenth value and the tenth transaction service fee from the collateral limit is transferred from the account of the ninth user in accordance with the transfer-out rules and then the same is transferred to the JYB account for transit of the platform in accordance with transfer-in rules; if the collateral is not transacted within one year, go to step 4

step 4: transfer an amount of JYB equal to the collateral limit JYB account of the ninth user, and transfer the same to the JYB account for transit of the platform; the collateral cannot be used for charge again.

Preferably, a service transaction between a seller and a buyer is processed in the settlement module in the following steps:

Step 1: acquire the price of the service and record it as the eleventh transaction price; calculate the eleventh transaction service fee by use of the eleventh transaction price;

Step 2: upon the transaction is completed, transfer an amount of JYB equal to sum of the eleventh transaction price and the eleventh transaction service fee from the JYB account of buyer by following the transfer-out rules as the transaction deposit;

Step 3: transfer an amount of JYB equal to difference between the eleventh transaction price and the eleventh transaction service fee to the JYB account of seller by following the transfer-in rules; upon the transaction is completed, transfer the remaining transaction deposit to the JYB account for service fee of the platform subject to the transfer-in rules.

Preferably, a debt transaction between a debtor and a creditor is processed in the settlement module in the following steps:

Step 1: acquire the price of the debt and record it as the twelfth transaction price; calculate the twelfth transaction service fee by use of the twelfth transaction price;

Step 2: upon the transaction is completed, transfer an amount of JYB equal to sum of the twelfth transaction price and the twelfth transaction service fee from the JYB account of debtor by following the transfer-out rules as the transaction deposit;

Step 3: transfer an amount of JYB equal to difference between the twelfth transaction price and the twelfth transaction service fee to the JYB account of the creditor by following the transfer-in rules; upon the transaction is completed, transfer the remaining transaction deposit to the JYB account for service fee of the platform subject to the transfer-in rules.

Preferably, when the thirteenth user intends to transfer the credit balance from the settlement module **23,** it needs to deposit an object amount, collateral amount or service amount which is not less than credit balance into the database **21;** when the thirteenth user intends to transfer the collateral balance from the settlement module **23,** it needs to deposit an object amount, collateral amount or service amount which is not less than collateral balance into the database **21;** otherwise, the credit balance or collateral balance is transferred from JYB account of the thirteenth user in accordance with the transfer-in rules into the JYB account for transit of the platform.

Preferably, the settlement module **23** calculates the total amount of circulation currency received by each sub-system in a settlement cycle, the total amount of service fee received by the platform in a settlement cycle, and the total amount of JYB balance of the fourteenth user upon the settlement, and calculates the amount of circulation currency to be refunded to the fourteenth user by using the following rules and formulas:

Each circulation currency based sub-system settles each circulation currency. During the settlement, service fee denominated in JYB collected by the platform is prioritized. All service fees are exchanged to the circulation currency at the conversion rate, and the remaining amount of circulation currency, set as the fourteenth value, are settled with the users in question.

The amount of circulation currency be refunded to the fourteenth user = the fourteenth value $\times$ (JYB balance of the fourteenth user / the total JYB balance of all the fourteenth users); send the ID and the amount of circulation currency to be refunded to the fourteenth user to the online banking server; when the circulation amount to be refunded to the fourteenth user is positive, the online banking server transfers the circulation amount to be refunded to the fourteenth user from the circulation currency account for transit of the platform and transfer the same to circulation currency account of the fourteenth user.

Preferably, regarding credit limit of the fifteenth user, the accumulated total amount of all objects sold in the platform within a cycle determines the increase of credit limit for the next cycle. after credit amount of the fifteenth user is transferred out, if the fifteenth user is unable to repay the amount within the preset cycle, the fifteenth user can apply for an extension; during the extension, collateral balance and credit balance of the fifteenth user are zero, JYB balance of the fifteenth user is automatically used to offset the transferred credit amount, credit balance and collateral balance of the fifteenth user cannot be recovered until the transferred credit amount is fully paid-up; upon the extension expires, if JYB balance of the fifteenth user is not used to offset the transferred credit amount, credit limit of the fifteenth user for the JYB becomes zero permanently.

Preferably, the collateral balance and credit balance transferred out by the sixteenth user is recorded as the sixteenth amount, if the sixteenth user fails to transfer the sixteenth amount within the extension in accordance with the transfer-in rules, the sixteenth user is regarded as a defaulter; then the sixteenth amount is transferred from the JYB account for service fee of the platform in the settlement module as the platform' supplementary amount and into the JYB account for transit of the platform in accordance with the transfer-in rules; the transferred the sixteenth amount is not used for settlement; when the sixteenth user transfers any amount of JYB into the platform, the sixteenth amount is automatically transferred into the JYB account for service fee in the settlement module to cover the previous preset amount in accordance with the transfer-in rules.

The present invention has the following benefits:

The present invention provides a JYB-based barter transaction platform. In the present invention, online real-time transaction in the form of shopping can be achieved without any circulation currency. On the platform, transactions between sellers and buyers are denominated in JYB, which is used to settle all objects and services purchased or sold on the platform. The JYB is a transaction measuring currency instead of a circulation currency, and cannot be directly exchanged with a circulation currency. Only when the amount of JYB is insufficient during a transaction, can the JYB difference be supplemented by a circulation currency at the conversion rate; in the case of regular settlement of a circulation currency, the barter transaction platform collects the amount of circulation currency it has received and refunds it by conversion rate to users. In the present invention, the circulation currency of each country is settled in its country, which can avoid risks about exchange rates and foreign exchange management.

**Brief Description of the Drawings**

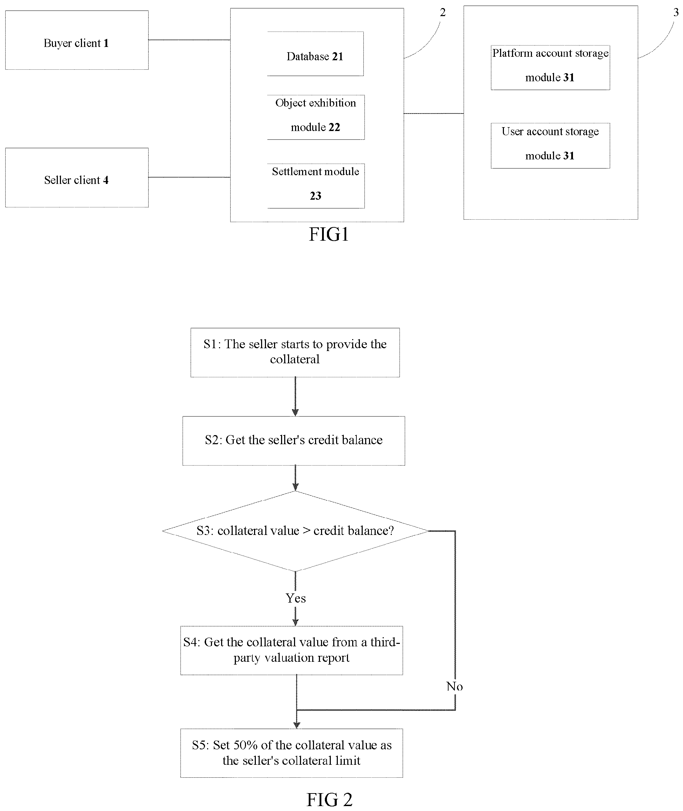

FIG 1 is an architecture diagram of the barter transaction platform as provided in the present invention;
FIG 2 is a flow chart for a collateral transaction in the barter transaction platform as provided in the present invention (initial stage);

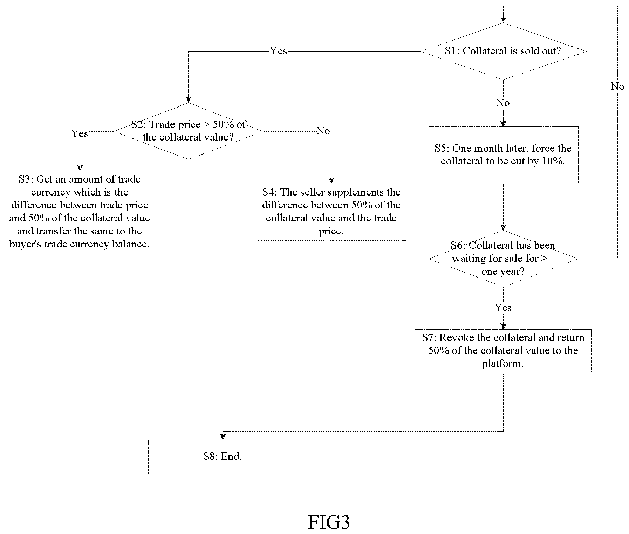

FIG 3 is a flow chart of a collateral transaction in the barter transaction platform as provided in the present invention (object transaction stage);

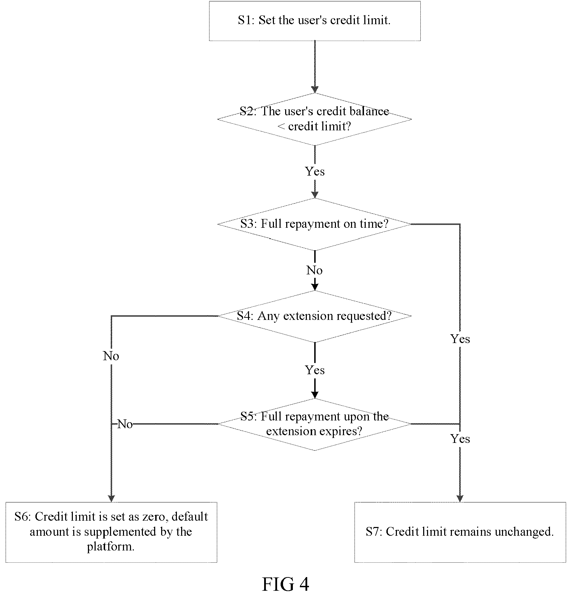

FIG 4 is a flow chart for a user credit transaction in the barter transaction platform as provided in the present invention;
Where, 1-client; 2-platform server; 21-database; 22-object exhibition module; 23-settlement module; 3-online banking server

**Description of the Preferred Embodiments**

The present is further described with the use of specific embodiments.

The circulation currency mentioned in the present invention is the fiat currency of a country.

The present invention provides a JYB-based barter transaction platform, comprising multiple clients **1** and a platform server **2,** where,

the multiple clients **1** are connected to the platform server **2;**
the clients are used by users to log in.
the platform server **2** includes a database **21,** an object exhibition module **22** and a settlement module **23;**
the database **21** stores the identity information of all users and the information of all objects;
the identity information includes the ID, name, address and contact details for each registered user;
the object information include physical object and its pictures, specification, model, parameters, unit of measure, quantity, price, collateral and its pictures, specification, model, parameters, unit of measure, quantity, price, service and its unit of measure, quantity, price, names of debtor and creditor, and amount;
the object exhibition module **22** is configured to acquire the identity information of user and the information of object from the database **21,** send the same to clients **1** and the clients 1 display the received information in a preset manner; and
the settlement module **23** stores the JYB account of user, the JYB account for transit of the platform and the JYB account for service fee of the platform; the JYB account of user contains the ID, JYB balance, credit limit, credit balance, collateral limit and collateral balance of the user; the JYB account for transit of the platform contains the JYB balance owned by the platform; the JYB account for service fee of the platform contains the service fee balance denominated in JYB of the platform.

ID is the unique code to identify a user.

JYB balance means the balance of a user on the platform. On the platform, all goods and services to be transacted are called objects and each object has a transaction price. On the platform, a credit limit is granted to each user, however, who may use a part of the credit limit, which requires a credit balance to be set for indicating the unused credit limit of user.

On the platform, the JYB balance, object price, credit limit and credit balance are denominated in JYB in the unit of yuan.

When the platform is being initialized, an ID will be set for each user whose JYB balance and credit limit are zero; after the credit limit of user is subsequently set, the credit balance is equal to the credit limit.

Optionally, the database also stores the identity verification codes of all users, and the identity verification code is used to verify the identity of a user.

To ensure the security of the platform server and data stored therein, the platform server can be based on distributed storage, cloud computation and data encryption, and the data stored therein (i.e., database) can be backed up in different locations.

Preferably, the barter transaction platform includes an online banking server **3:**

The online banking server **3** is connected to the platform server **2;**
The online banking server **3** stores the circulation currency account of user, the circulation currency account for transit of the platform and the circulation currency account for service fee of the platform; the circulation currency account of user contains the ID of the user; the circulation currency account for transit contains the platform ID and circulation currency balance; the circulation currency account for service fee of the platform contains the service fee ID.

Preferably, JYB is generated in the settlement module **23** in accordance with the following rules:

The user generates collateral balance denominated in JYB in the settlement module **23** by using the collateral tradable asset amount;

In other words, the user can obtain JYB by withdrawing its collateral balance.

The user generates credit balance denominated in JYB in the settlement module **23** by using its credit limit;

In other words, the user can obtain JYB by withdrawing its credit balance.

The user generates JYB balance in the settlement module **23** by using the amount of credit; and

The user supplements JYB difference at the conversion rate by using circulation currency and then generates JYB balance in the settlement module **23.**

Take China as an example, the credit limit of an enterprise is set as 1% of registered capital of the the enterprise; and the credit limit of an individual is set as RMB 10,000. According to data published online at the end of 2014, China had 69,322,200 enterprises of all types, with a total registered capital of RMB 129.23 trillion, and 455 million individual credit cards were issued. With the setting rules of credit limits for enterprises and individuals, the register capital of RMB 129.23 trillion can generate a total credit limit of 1.2923 trillion for enterprises on the platform; assuming 100 individuals apply for credit limits, a total credit limit of RMB 1 trillion for individuals can be generated. In this way, by setting up charge on any tradable assets which are equivalent to the credit limits and not required to be valuated by third-party institutions, a total amount of 2.2923 trillion yuan (JYB) can be generated. On the platform, the credit limit and collateral limit of user can generate 4.5846 trillion yuan (JYB). Other methods for generating JYB are not further repeated. The example describes how much JYB can be generated.

Preferably, the JYB transaction rules of the settlement module **23** are as follows:

The JYB is a trade measuring currency instead of a circulation currency. With the price ratio of JYB reference country to other countries, the conversion rate of the JYB to a circulation currency is generated in the settlement module **23;** the platform sets the ratio of JYB to the price of the JYB reference country as 1:1; JYB cannot be directly exchanged for a circulation currency, only when the amount of JYB is insufficient during a transaction, can the JYB difference be supplemented by a circulation currency at the conversion rate. The regular settlement in each subsystem can only be denominated in the circulation currency of the country where the subsystem is designed for. Within a settlement cycle, the subsystem service fee denominated in the JYB is converted to the circulation currency and then deducted from the circulation currency account of the subsystem. In each subsystem, the remaining amount of circulation currency in that subsystem shall be returned to users according to the share of user in the total amount of JYB.

Optionally, the JYB sets no debit interest and all objects are exhibited free of charge on the barter transaction platform.

Preferably, the JYB transfer-out rules of the settlement module **23** are as follows:

To transfer the fifth amount of JYB from the JYB account of user, first it is required to judge whether the JYB balance in the account is larger than the the fifth amount. If so, the the fifth amount is deducted from the JYB balance; if not, the difference is deducted from the credit balance and collateral balance; when the sum of credit balance and collateral balance is insufficient, circulation currency is exchanged at the conversion rate to cover the difference.

For example, for a user whose JYB balance is 100 yuan, credit balance is 50 yuan, collateral balance is 50 yuan, if the amount of JYB to be transferred out is 90 yuan (90 <100), the transfer is permitted and after such transfer, the JYB balance, credit balance and collateral balance become 10 yuan, 50 yuan and 50 yuan respectively; if the amount of JYB to be transferred-out is 110 yuan [110 >100, but 110 < (100+50+50)], the JYB balance of 100 yuan is completely transferred out, and the difference (i.e., 10 yuan) may be transferred out of either the credit balance or the collateral balance. For example, when the 10 yuan is transferred out of the credit balance, the result is that JYB balance, credit balance and collateral balance become 0 yuan, 40 yuan and 50 yuan, respectively. If the 210 yuan (JYB) is to be transferred out, [210 > (100+50+50)], the user may supplement the 10 yuan difference with a circulation currency.

Preferably, for the settlement module **23,** JYB is transferred into an account in accordance with the following rules:

To transfer the sixth amount of JYB into the JYB account of user, if the sum of credit balance and collateral balance in the account is equal to the sum of credit limit and collateral limit for the account, the sixth amount is transferred into the JYB balance of the account; if the sum of credit balance, collateral balance and the sixth amount is larger than the sum of credit limit and collateral limit, it is prioritized to increase the credit balance and collateral balance so that they are equal to credit limit and collateral balance respectively by use of the sixth amount, and the remaining part of the sixth amount is transferred to JYB balance of the six user.

For example, for a user whose JYB balance is 100 yuan, credit limit is 50 yuan, credit balance is 50 yuan collateral limit is 50 yuan and collateral balance is 50 yuan, if the amount of JYB to be transferred in is 100 yuan (because credit limit =credit balance, collateral limit =collateral balance), after such transfer, the JYB balance, credit limit, credit balance, collateral limit and collateral balance become 200 yuan, 50 yuan, 50 yuan, 50 yuan and 50 yuan respectively;

When the JYB balance, credit limit, credit balance, collateral limit and collateral balance of user become 0 yuan, 50 yuan, 40 yuan, 50 yuan and 40 yuan, respectively, if the amount of JYB to be transferred in is 100 yuan (because credit limit > credit balance, collateral limit > collateral balance), after such transfer, the JYB balance, credit limit, credit balance, collateral limit and collateral balance become 80 yuan, 50 yuan, 50 yuan, 50 yuan and 50 yuan respectively.

Preferably, a physical object trade between a seller and a buyer is processed in the settlement module **23** in the following steps:

Step 1: acquire the price of the physical object and record it as the seventh transaction price; calculate the the seventh transaction service fee by use of the seventh transaction price;

Step 2: transfer an amount of JYB equal to sum of the seventh transaction price and the seventh transaction service fee from the JYB account of buyer in accordance with the transfer rules, and transfer the same to the JYB account for transit of the platform as the deposit;

Step 3: upon the trade is completed, transfer an amount of JYB equal to difference between the seventh transaction price and the seventh transaction service fee from the JYB account for transit of the platform in accordance with the transfer-out rules, and transfer the same to the JYB account of seller and transfer the remaining trade deposit to the JYB account for service fee of the platform in accordance with the transfer-in rules.

Physical object is a general object and sold on the platform in a way consistent with the way for existing online e-commerce platform. The difference lies in that trade settlement is denominated in a circulation currency on existing online platform and in the JYB on the platform.

Optionally, the service fee is only collected as a certain percent of the trade amount during a trade process on the platform. Service fee is denominated in JYB and collected against two parties to the trade. The service fee rate is set as 1% of the trade amount. The range of service fee rate is set for each sub-system on the basis of the preset ratio of the subsystem. Service fee rate is adjusted on a yearly basis. Regarding collecting service fee on a circulation currency, a preset deficit value is introduced. When the preset value is exceeded, a service fee on the circulation currency is collected. The rate of service fee on a circulation currency is adjusted according to the deficit/surplus ratio on a monthly basis.

Preferably, in the Step 2, when online banking server **3** judges that the the eighth amount of circulation currency is transferred from the circulation currency account of user in respect of the eighth ID to the circulation currency account for transit of the platform, the online banking server **3** sends the eighth ID and the the eighth amount to the settlement module **23;** the settlement module **23** transfers an amount of JYB equal to the quotient produced from the division of the the eighth amount and the conversion rate into the JYB account of user in respect of the user ID by following the transfer-in rules;

Preferably, a collateral trade between a seller and a buyer is processed in the settlement module **23** in the following steps:

Step 1: acquire the collateral value of the ninth user and record it as the ninth value;

Step 2: transfer an amount of JYB equal to a certain ratio of the ninth value from the JYB account for transit of the platform, and transfer the same to the JYB account of the the ninth user as the collateral balance;

Step 3: set a price decrease cycle and price of collateral in each cycle is forced to be decreased from the last cycle at a certain discount; when the tenth user buys the collateral at the tenth value and if the tenth value is larger than or equal to collateral limit, the collateral limit of the the ninth user becomes zero and the difference between the the tenth value and the tenth transaction service fee is transferred into the JYB account of the tenth user; if the tenth value is smaller than the collateral limit, the difference by deducting the tenth value and the tenth transaction service fee from the collateral limit is transferred from the account of the ninth user in accordance with the transfer-out rules and then the same is transferred to the JYB account for transit of the platform in accordance with transfer-in rules; if the collateral is not traded within one year, the step 4 is executed;

Step 4: transfer an amount of JYB equal to the collateral limit JYB account of the ninth user, and transfer the same to the JYB account for transit of the platform; the collateral cannot be used for charge again.

Preferably, a service trade between a seller and a buyer is processed in the settlement module 23 in the following steps:

Step 1: acquire the price of the service and record it as the eleventh transaction price; calculate the eleventh transaction service fee by use of the eleventh transaction price;

Step 2: upon the trade is completed, transfer an amount of JYB equal to sum of the eleventh transaction price and the eleventh transaction service fee from the JYB account of buyer by following the transfer-out rules as the trade deposit;

Step 3: transfer an amount of JYB equal to difference between the eleventh transaction price and the eleventh transaction service fee to the JYB account of seller by following the transfer-in rules; upon the trade is completed, transfer the remaining trade deposit to the JYB account for service fee of the platform subject to the transfer-in rules.

Preferably, a debt trade between a debtor and a creditor is processed in the settlement module **23** in the following steps:

Step 1: acquire the price of the debt and record it as the twelfth transaction price; calculate the twelfth transaction service fee by use of the twelfth transaction price;

Step 2: upon the trade is completed, transfer an amount of JYB equal to sum of the twelfth transaction price and the twelfth transaction service fee from the JYB account of debtor by following the transfer-out rules as the trade deposit;

Step 3: transfer an amount of JYB equal to difference between the twelfth transaction price and the twelfth transaction service fee to JYB account of the creditor by following the transfer-in rules; upon the transaction is completed, transfer the remaining trade deposit to the JYB account for service fee of the platform subject to the transfer-in rules.

Preferably, when the thirteenth user intends to transfer the credit balance from the settlement module **23,** it needs to deposit an object amount, collateral amount or service amount which is not less than credit balance into the database **21;** when the thirteenth user intends to transfer the collateral balance from the settlement module **23,** it needs to deposit an object amount, collateral amount or service amount which is not less than collateral balance into the database **21;** otherwise, the credit balance or collateral balance is transferred from JYB account of the thirteenth user in accordance with the transfer-in rules into the JYB account for transit of the platform.

Preferably, the settlement module **23** calculates the total amount of circulation currency received by each sub-system in a settlement cycle, the total amount of service fee received by the platform in a settlement cycle, and the total amount of JYB balance of the fourteenth user upon the settlement, and calculates the amount of circulation currency to be refunded to the fourteenth user by using the following rules and formulas:

Each circulation currency based sub-system settles each circulation currency. During the settlement, service fee denominated in JYB that is collected by the platform is prioritized.-All service fees are exchanged into the circulation currency at conversion rate, and the remaining amount of circulation currency, set as the fourteenth value, are settled with the users in question.

The amount of circulation currency to be refunded to the fourteenth user = the fourteenth value x (JYB balance of the fourteenth user / the total JYB balance of all users in trade **14**); send the ID and amount of circulation currency to be refunded to the fourteenth user to the online banking server **3;** when the amount of circulation currency to be refunded to the fourteenth user is positive, the online banking server **3** transfers the amount of circulation currency to the fourteenth user from the circulation currency account for transit of the platform and transfer the same to circulation currency account of the fourteenth user.

Preferably, regarding credit limit of the fifteenth user, the accumulated total amount of all objects sold in the platform within a cycle determines the increase of credit limit for the next cycle. after credit amount of the fifteenth user is transferred out, if the fifteenth user is unable to repay the amount within the preset cycle, the fifteenth user can apply for an extension; during the extension, collateral balance and credit balance of the fifteenth user are zero, JYB balance of the fifteenth user is automatically used to offset the transferred credit amount, credit balance and collateral balance of the fifteenth user cannot be recovered until the transferred credit amount is fully paid-up; upon the extension expires, if JYB balance of the fifteenth user is not used to offset the transferred credit amount, credit limit of the fifteenth user for the JYB becomes zero permanently.

Preferably, the collateral balance and credit balance transferred out by the sixteenth user is recorded as the sixteenth amount, if the sixteenth user fails to transfer the sixteenth amount within the extension in accordance with the transfer-in rules, the sixteenth user is regarded as a defaulter; then the sixteenth amount is transferred from the JYB account for service fee of the platform in the settlement module **23** as the platform' supplementary amount and into the JYB account for transit of the platform in accordance with the transfer-in rules; the transferred the sixteenth amount is not used for settlement; when the sixteenth user transfers any JYB into the platform, the sixteenth amount is automatically transferred into the JYB account for service fee in the settlement module **23** to cover the previous preset amount in accordance with the transfer-in rules.

Optionally, each user on the platform can only link one bank account. Each sub-system has a circulation currency account for transit and a circulation currency account for service fee of the platform. Each month, each sub-system calculates the total amount of JYB and total amount of service fee by the type of circulation currency. Within a settlement cycle, service fee of each subsystem denominated in the JYB is converted to its circulation currency, and then deducted from the circulation currency account of the system. The remaining amount of circulation currency in the sub-system is then returned to all users according to the share of each user in the total amount of JYB of the sub-system. Each sub-system is operated and settlement therein is independently. Once a sub-system is developed, it is launched onto the platform.

Optionally, the circulation currency is the fiat currency of a country.

Preferably, the objects include services; and the rules applied to services traded between two parties are the same as these to physical objects.

Preferably, the objects include debts and the rules applied to debts traded between two parties are the same as these to physical objects.

Optionally, the process for collateral trade is as follows:

(1) initial stage

S1: the seller begins setting up a collateral;

S2: acquire the credit balance of user;

S3: judge if collateral value > credit balance? If yes, go to S4; if not, go to S5;

S4: acquire the collateral value from a third-party valuation report;

S5: transfer 50% of the collateral value into the JYB balance of seller; transfer 50% of the collateral value from the JYB account of the platform into the collateral balance of seller.

(2) object transaction stage

S1: the collateral is sold? If yes, go to S2; if not, go to S6; if the collateral is sold out, the platform transfers JYB of an amount equal to the collateral value from the JYB balance of buyer to the JYB balance of seller;

S2: trade price > 50% of the collateral value? If yes, go to S3; if not, go to S4;

S3: the difference between the trade amount and 50% of the collateral value is transferred into the JYB balance of seller; because the platform has paid 50% of the collateral value to the seller, it only needs to transfer the difference between the trade amount and 50% of the collateral value into the JYB balance of seller and transfer 50% of the collateral value to the JYB balance of the platform;

S4: the seller supplements the difference 50% of the collateral value and the trade price; because the platform has paid 50% of the collateral value to the seller and the trade price is lower than 50% of the collateral value, the seller needs to supplement the difference.

S5: on a bi-monthly basis, if the collateral is not sold out, collateral value is forced to be lowered by 10%, namely, price-cut;

S6: the waiting-for-sale time of the collateral is >= 1 year? If yes, go to S7; if not, go to S1;

S7: revoke the collateral and return an amount of JYB equal to 50% of the collateral value to the platform. In other words, the collateral trade gets failed. Since the platform has paid 50% of the collateral value to the seller, the seller needs to return the so obtained JYB to the platform;

S8: the trade is ended.

Preferably, when the duration for the credit balance of user is smaller than the credit limit is longer than the preset duration, set the credit balance and credit limit of user as zero.

The specific process for trade with the aid of credit balance is as follows:

S1: set the credit limit of user. In the case of an individual user, its credit limit is the sum of a certain percent of the increase of its sale volume on the platform during a year and the credit limit for a general individual; in the case of an enterprise user, its credit limit is the sum of a certain percent of the increase of its sale volume on the platform during a year and a certain percent of register capital for a general enterprise; the platform adjusts each credit limit of user with the principles each year.

S2: the credit balance of user < credit limit? Credit balance is smaller than credit limit means that the user has used its credit limit, namely, overdraft;

S3: the overdraft is paid off on time? If yes, go to S7; if not, go to S4;

S4: is an extension requested? If yes, go to S5; if not, go to S6;

S5: the overdraft is paid off before or when the extension expires? If yes, go to S7; if not, go to S6;

S6: reset the credit limit as zero and the preset amount is supplemented by the platform; in other words, the user fails to pay off the due overdraft (the platform may resort to legal actions against the user for recovery of the amount);

S7: the user pays off due amount on time. In this case, the credit limit of user is maintained.

Optionally, credit rating of user on the platform may affect the increase of its credit limit. When an enterprise presets, the credit limit of enterprise becomes zero, and the permanent credit limit of the legal representative of the enterprise becomes zero; when the legal representative of the enterprise is changed while its debit is not paid off, the credit limit of the new legal representative is also zero; as soon as the debt is repaid, the credit limits for both new legal representative and the enterprise are recovered; if the legal representative of the enterprise is not changed, the credit limit of the enterprise cannot be recovered.

Optionally, the platform can support contract trade, specifically,

(1) a buyer pays a contract deposit into the JYB balance of the platform;
(2) a seller can withdraw JYB to purchase objects;
(3) after the contract is completed, the two parties make confirmation;
(4) contract deposit is transferred into the JYB account for transit of the platform.

Optionally, the platform can support installment purchase. If the buyer can repay each installment on time, the purchased object is obtained by the buyer; if not, the object becomes a collateral and the platform can claim against the buyer.

Optionally, the platform can supports installment senior care service, specifically, a senior citizen in need of senior care service can give security to the platform over any of its fixed assets for senior care as object to-be-traded by way of charge, the platform provides a JYB amount equal to 50% of the asset to the senior citizen on a monthly basis; if the senior citizen is dead, the object to-be-traded becomes collateral object, which is sold by the platform. If the sale price is higher than the collateral value, the difference is returned to the heir of senior citizen.

Optionally, the platform has the following formulas that are commonly used,

JYB stock = total JYB balance of all users + deposit balance of the platform in JYB+ service fee balance of the platform in JYB;

the deposit amount of buyer = object price + object price × 1% (1% is the service fee rate);

the service fee of the platform = object price x (1% +1%) (1% is the service fee rate and service fee is imposed on two parties);

the JYB income of seller = object price- object price x 1% (1% is the service fee rate);

amount of circulation currency refunded to a single user each month = [the total amount of circulation currency received by the platform (the balance of the platform in its intermediary bank)- the service fee balance of the platform in JYB   x conversion rate between the JYB and a circulation currency ] × {JYB balance of the single user/ total JYB balance of all users};

conversion rate between the JYB and circulation currency of a country = comparable price of China/ comparable price of the country;

comparable price = monthly average price of comparable references;

trade surplus means cross-system JYB income > JYB expenditure;

trade deficit means cross-system JYB income < JYB expenditure;

preset ratio = [ total amount of withdrawn collateral that is not repaid on time + total amount of withdrawn credit that is not repaid on time] / [ total amount of withdrawal collateral + total amount of withdrawn credit];

cyclical average stock of JYB = sum of total JYB balance of all users accumulated at the end of each month through the year/ 12;

Optionally, the platform has the following terms that are commonly used,

1. A physical object trade means a direct trade denominated in JYB without the aid of any circulation currency on the platform. When the JYB balance is insufficient to pay the trade price, the difference could be supplemented by using a circulation currency converted at the conversion rate.

2. A debt trade means that two registered users in the platform agree to settle their debts and claims through the platform. In this case, the debtor can set its tradable stock asset as the collateral object to-be-traded, and then withdraw an amount of JYB equal to 50% of the collateral value from the platform to repay the creditor; the creditor receives the amount of JYB; the debt relationship is terminated. The creditor may purchase goods and services it needs with the received JYB on the platform.

3. A service trade means the platform provides services permitted by laws that are settled in JYB.

4. A credit trade means an individual or enterprise can get a certain limit of JYB in accordance with the trade rules, withdraw any amount from the limit to purchase goods and services it needs.

5. A general object is an object that can be sold on the barter transaction platform and is equivalent to the object sold on any existing online platform.

6. A collateral object is an object traded on the platform that can be set as a collateral.

7. A tradable object is the object that can be immediately realized.

8. An object to-be-traded is a term used in two cases. First, upon any installment purchase by way of charge: the collateral is called the object to-be-traded; when any installment is not repaid on time, the object to-be-traded becomes a collateral object; when all installments are repaid on time, the object to-be-traded becomes the object purchased by the buyer. Second, in senior care loan, the fixed asset used as a collateral for senior care loan is also called object to-be-traded.

9. Generable JYB is the balance of JYB which is not withdrawn from credit limit and collateral limit.

10. Generated JYB is the JYB balance generated through trade of an object.

The present invention provides a JYB-based barter transaction platform. In the platform, trades between buyers and sellers are denominated in JYB, and goods and services purchased in the platform are settled in JYB. The JYB is a trade measuring currency instead of a circulation currency, and it cannot be directly exchanged with a circulation currency. Only when the amount of JYB is insufficient during a trade, can the difference be supplemented by a circulation currency at the conversion rate. In the case of regular settlement of a circulation currency, the platform collects the amount of the circulation currency it has received and returns it to users by conversion rate. By replacing any circulation currency, the JYB helps achieve barter trade.

In the platform, objects must be permitted by laws. Negotiable securities (e.g., stock, bond or certificate of deposit) and assets that cannot be immediately realized are not allowed to be placed on the platform.

All trades performed in each sub-system of the platform must comply with laws of the country where the sub-system is applied. Any cross-system trade must observe laws of the two countries where two parties to the trade reside in. JYB is used to measure all trades that are made in all sub-systems and governed by countries where these sub-systems work.

The circulation currency mentioned in the present invention is the fiat currency of a country.

The conversion rate between the JYB and a circulation currency is based on the price ratio of each country and does not relate to the exchange rate of each country. The conversion rate between the JYB and RMB is 1:1, and that between the JYB and the circulation currency of another country is based on the ratio of the price of China to the price of such country. Platform users determine the references for price ratio by the way of voting. Number of references for each sub-system may vary from one another. But all these references must be within the total list of references of the platform. The conversion rate of the JYB to each circulation currency is calculated on a monthly basis. The finally determined conversion rates are published in the platform.

Total amount of JYB is determined by sum of total credit limit and total collateral value. Increment of the amount of JYB is determined by the volume of new trades started in a unit time. If any existing amount of existing JYB is used into a trade again, this trade does not affect the total stock of JYB. The amount of JYB is increased due to circulation currencies that are placed into the platform within a settlement cycle, but at the end of the cycle, circulation currencies are returned to users and therefore offset the so increased amount of JYB. The JYB is not issued and its stock is determined by the volume of trades instead of any human factor. Total amount of JYB does not affect price. There is not limit for the amount of JYB, which is completely affected by trade size.

The risk related to the JYB is chiefly dependent of quantity and ratio of defaulters who fail to repay their overdrafts. In the event of any preset, the total preset amount will be offset by the service fee collected by the platform. Optionally, preset ratio can affect the service fee rate. Service fee rate is adjusted according to the preset ratio for a sub-system within a cycle. Ratio of circulation currency to be collected is adjusted according to the deficit and surplus of the subsystem. The overall operation of this platform is risk free, so is the operation of JYB. Total debt and loan on the platform level is balanced and the platform operation is stable.

JYB is neither an issued currency nor a circulation currency. Not only including all advantages of a digital currency, JYB but also overcomes the defects of circulation currency. During a trade, the difference between needed and available amount of JYB may be supplemented by a circulation currency at the conversion rate. Upon settlement, the amount of JYB which has been converted from a circulation currency is again converted back at the same conversion rate and refunded to users. JYB is used to measure trades. It comes from and serves trades. Except for trades, any other activity cannot generate JYB. This means JYB can be neither generated by computers, nor purchased with any circulation currency, nor obtained in any other way. To acquire any amount of JYB, one has to trade tradable objects or render services in the platform. This returns to the nature of trade. As a supplement and a substitute of any circulation currency, the JYB has not debit interest. By realizing barter trade in the common shopping form, the present invention also overcomes failure of real-time transaction and difficulty of getting urgently need objects, problems that cannot be solved by existing online trades. Compared to online shopping, the present invention can realize real-time transaction without the help of any circulation currency, which directly make assets profitable, effectively relieve pressures from funds shortfall and debts on enterprise, lower trade cost, incentivize consumption force, revitalize market and help enterprises create opportunities for economic growth.

Obviously, the embodiments only serve to clearly describe the present invention and do not limit the ways in which the present invention is implemented. Many modification and variations of the present invention are possible for any common technical person in this field in light of the above teachings. It is therefore not necessary to exhaustively list all possible embodiments. Any and all obvious changes or modifications to the hereinabove description are within the scope of the present invention.

**Claims**

1.  A JYB (transaction currency)-based barter transaction platform, comprising multiple clients **1** and a platform server **2, characterized in that**:

      the multiple clients **1** are all connected to the platform server **2;**
      the platform server **2** comprises a database **21,** an object exhibition module **22** and a settlement module **23;**
      the database **21** stores all identity information of users and all object information;
      the identity information includes the ID, name, address and contact details of each registered user;
      the object information includes the physical object and its picture, specification, model, parameters, unit of measure, quantity, price, collateral and its pictures, specification, model, parameters, unit of measure, quantity, price, service and its unit of measure, quantity, price, names of debtor and creditor, and amount;
      the object exhibition module **22** is configured to acquire user identity information and object information from the database **21** and send the same to clients **1,** and the clients **1** display the received information in a preset manner; and
      the settlement module **23** stores JYB accounts of users, JYB account for transit and JYB account for service fee of the platform; the JYB account of user contains the ID, JYB balance, credit limit, credit balance, collateral limit and collateral balance of the user; the JYB account for transit of the platform contains the JYB balance owned by the platform; the JYB account for service fee of the platform contains service fee balance denominated in JYB of the platform.

2. The barter transaction platform according to Claim 1, **characterized in that**:
   the barter transaction platform further comprises an online banking server **3**:

   the online banking server **3** is connected to the platform server **2**; and
   the online banking server **3** stores the circulation currency account of user, the circulation currency account for transit and the circulation currency account for service fee of the platform; the circulation currency account of user contains the ID of the user; the circulation currency account for transit of the platform contains the platform ID and circulation currency balance of the platform; the circulation currency account for service fee of the platform contains the service fee ID.

3. The JYB-based barter transaction platform according to Claim 1 or Claim 2, **characterized in that** the JYB is generated in the settlement module **23** in accordance with the following rules:

   The user generates collateral balance denominated in JYB in the settlement module **23** by using the collateral tradable asset amount;
   The user generates credit balance denominated in JYB in the settlement module **23** by using its credit limit;
   The user generates JYB balance in the settlement module **23** by using the amount owed to it as a creditor; and
   The user makes up JYB difference according to the conversion rate with circulation currency and then generates JYB balance in the settlement module **23.**

4. The JYB-based barter transaction platform according to any of Claim 1 to Claim 3, **characterized in that** the JYB transaction rules of the settlement module **23** are as follows:
   The JYB is a transaction measuring currency instead of a circulation currency, wherein the conversion rate of JYB to a circulation currency is generated in the settlement module **23** according to the price ratio of JYB reference country to other countries; the platform sets the ratio of JYB to the price of JYB reference country as 1:1; JYB cannot be directly exchanged for any circulation currency, and only when JYB is insufficient during a transaction, can the JYB difference be supplemented by any circulation currency at the conversion rate. The regular settlement in each subsystem can only be denominated in the circulation currency of the country where the subsystem is designed for. Within a settlement cycle, the subsystem service fee denominated in the JYB is converted to the circulation currency and then deducted from the circulation currency account of the subsystem. In each subsystem, the remaining amount of circulation currency **in that** subsystem shall be returned to users according to the share of each user in the total amount of JYB

5. The JYB-based transaction platform according to any of Claim 1 to Claim 4, **characterized in that** the JYB transfer-out rules of the settlement module **23** are as follows:
   To transfer the fifth amount of JYB from JYB account of user, first it is required to judge whether JYB balance in the account is larger than or equal to the fifth amount. If so, the the fifth amount is deducted from the JYB balance; if not, the difference is deducted from the credit balance and collateral balance; when the sum of credit balance and collateral balance is insufficient, an amount of a circulation currency is exchanged to JYB at the conversion rate to cover the difference.

6. The JYB-based barter transaction platform according to any of Claim 1 to Claim 5, **characterized in that** the transfer-in rules in the settlement module **23** are as follows:
   To transfer the sixth amount of JYB into the JYB account of user, if the sum of credit balance and collateral balance of the account is equal to the sum of credit limit and collateral limit of the account, the sixth amount is transferred into the JYB balance of the account; if the sum of credit balance, collateral balance and the sixth amount is larger than the sum of credit limit and collateral limit, it is prioritized to increase the credit balance and collateral balance so that they are equal to credit limit and collateral balance respectively by use of the sixth amount, and the remaining part of the sixth amount is transferred to the JYB balance of the six user.

7. The JYB-based barter transaction platform according to any of Claim 1 to Claim 6, **characterized in that**, a barter transaction between a seller and a buyer is completed in the settlement module **23** in the following steps:

   Step 1: acquire the price of the physical object and record it as the seventh transaction price; calculate the the seventh transaction service fee with the seventh transaction price;

Step 2: transfer an amount of JYB equal to the sum of the seventh transaction price and the seventh transaction service fee from the JYB account of buyer in accordance with the transfer-out rules, and transfer the same to the JYB account for transit of the platform as the deposit;

Step 3: upon completion of the transaction, transfer an amount of JYB equal to difference between the seventh transaction price and the seventh transaction service fee from the JYB account for transit of the platform in accordance with the transfer-out rules, and transfer the same to JYB account of seller and transfer the remaining transaction deposit to the JYB account for service fee of the platform in accordance with the transfer-in rules.

**8.** The JYB-based barter transaction platform according to Claim 7, **characterized in that**, in the Step 2, when online banking server **3** judges that the eighth amount of circulation currency is transferred from the circulation currency account of user in respect of the eighth ID to the circulation currency account for transit of the platform, the online banking server **3** sends the eighth ID and the the eighth amount to the settlement module **23;** the settlement module **23** transfers an amount of JYB equal to the quotient produced from division of the the eighth amount and the conversion rate into the currency account of user in respect of the user ID by following the transfer-in rules.

**9.** The JYB-based barter transaction platform according to any of Claim 1 to Claim 8, **characterized in that**, a collateral transaction between a seller and a buyer is processed in the settlement module **23** in the following steps:

Step 1: acquire the collateral value of the ninth user and record it as the ninth value;

Step 2: transfer an amount of JYB equal to a certain ratio of the ninth value from the JYB account for transit of the platform, and transfer the same to the JYB account of the ninth user as the collateral balance;

Step 3: set a price decrease cycle and price of collateral in each cycle is forced to be decreased from the last cycle at a certain discount; when the tenth user buys the collateral at the tenth value and if the tenth value is larger than or equal to collateral limit, the collateral limit of the ninth user becomes zero and the difference between the tenth value and the tenth transaction service fee is transferred into the JYB account of the tenth user; if the tenth value is smaller than the collateral limit, the difference by deducting the tenth value and the tenth transaction service fee from the collateral limit is transferred from the account of the ninth user in accordance with the transfer-out rules and then the same is transferred to the JYB account for transit of the platform in accordance with the transfer-in rules; if the collateral is not transacted within one year, go to step 4;

Step 4: transfer an amount of JYB equal to the collateral limit from JYB account of the ninth user, and transfer the same to the JYB account for transit of the platform; the collateral cannot be used for charge again.

**10.** The JYB-based barter transaction platform according to any of Claim 1 to Claim 9, **characterized in that**, a service transaction between a seller and a buyer is processed in the settlement module **23** in the following steps:

Step 1: acquire the price of the service and record it as the eleventh transaction price; calculate the eleventh transaction service fee by use of the eleventh transaction price;

Step 2: upon the transaction is completed, transfer an amount of JYB equal to sum of the eleventh transaction price and the eleventh transaction service fee from the JYB account of buyer by following the transfer-out rules as the transaction deposit;

Step 3: transfer an amount of JYB equal to difference between the eleventh transaction price and the eleventh transaction service fee to the JYB account of seller by following the transfer-in rules; upon the transaction is completed, transfer the remaining transaction deposit to the JYB account for service fee of the platform subject to the transfer-in rules.

**11.** The JYB-based barter transaction platform according to any of Claim 1 to Claim 10, **characterized in that**, a debt transaction between a debtor and a creditor is processed in the settlement module **23** in the following steps:

Step 1: acquire the price of the debt and record it as the twelfth transaction price; calculate the twelfth transaction service fee by use of the twelfth transaction price;

Step 2: upon the transaction is completed, transfer an amount of JYB equal to sum of the twelfth transaction price and the twelfth transaction service fee from the JYB account of the debtor by following the transfer-out rules as the transaction deposit;

Step 3: transfer an amount of JYB equal to difference between the twelfth transaction price and the twelfth transaction service fee to JYB account of the creditor by following the transfer-in rules; upon the transaction is completed, transfer the remaining transaction deposit to the JYB account for service fee of the platform subject to the transfer-in rules.

**12.** The JYB-based barter transaction platform according to any of Claim 1 to Claim 11, **characterized in that**, when the thirteenth user intends to transfer the credit balance from the settlement module **23,** it needs to deposit an object amount, collateral amount or service amount which is not less than the credit balance into the database **21;** when the thirteenth user intends to transfer the collateral balance from the settlement module **23,** it needs to deposit an object amount, collateral amount or service amount which is not less than the collateral balance into the database **21;** otherwise, the credit balance or collateral balance is transferred from JYB account of the thirteenth user in accordance with the transfer-in rules into the JYB account for transit of the platform.

**13.** The JYB-based barter transaction platform according to any of Claim 1 to Claim 12, **characterized in that**, the settlement module **23** calculates the total amount of circulation currency received by each sub-system within a settlement cycle, the total amount of service fee received by the platform in a settlement cycle, and the total amount of JYB balance of the fourteenth user upon the settlement, and calculates the amount of circulation currency to be refunded to the fourteenth user by using the following rules and formulas:
Each circulation currency based sub-system settles a circulation currency. During the settlement, service fee denominated in JYB that is collected by the platform is prioritized. All service fees are exchanged into circulation currencies at conversion rates, and the remaining amount of circulation currencies, set as the fourteenth value, are settled with the users in question.
The amount of circulation currency to be refunded to the fourteenth user = the fourteenth value $\times$ (JYB balance of the fourteenth user / the total JYB balance of all the fourteenth users); send the ID and the amount of circulation currency to be refunded to the fourteenth user to the online banking server **3;** when the amount of circulation currency to be refunded to the fourteenth user is positive, the online banking server **3** transfers the amount of circulation currency to be refunded to the fourteenth user from the circulation currency account for transit of the platform and transfers the same to circulation currency account of the fourteenth user.

**14.** The JYB-based barter transaction platform according to any of Claim 1 to Claim 13, **characterized in that**, regarding credit limit of the fifteenth user, the accumulated total amount of all objects sold in the platform within a cycle determines the increase of credit limit for the next cycle. after credit amount of the fifteenth user is transferred out, if the fifteenth user is unable to repay the amount within the preset cycle, the fifteenth user can apply for an extension; during the extension, collateral balance and credit balance of the fifteenth user are zero, JYB balance of the fifteenth user is automatically used to offset the transferred credit amount, credit balance and collateral balance of the fifteenth user cannot be recovered until the transferred credit amount is fully paid-up; upon the extension expires, if JYB balance of the fifteenth user is not used to offset the transferred credit amount, credit limit of the fifteenth user for the JYB becomes zero permanently.

**15.** The JYB-based barter transaction platform according to any of Claim 1 to Claim 14, **characterized in that**, the collateral balance and credit balance transferred out by the sixteenth user is recorded as the sixteenth amount, if the sixteenth user fails to transfer the sixteenth amount within the extension in accordance with the transfer-in rules, the sixteenth user is regarded as a defaulter; then the sixteenth amount is transferred as the supplementary amount of the platform from the JYB account for service fee of the platform in the settlement module **23** to the JYB account for transit of the platform in accordance with the transfer-in rules; the transferred the sixteenth amount is not used for settlement; when the sixteenth user transfers any amount of JYB into the platform, the sixteenth amount is automatically transferred into the JYB account for service fee in the settlement module **23** to cover the previous preset amount in accordance with the transfer-in rules.

| Buyer client **1** | | Database **21** | 2 | Platform account storage module **31** | 3 |
| Seller client **4** | | Object exhibition module **22** | | User account storage module **31** | |
| | | Settlement module **23** | | | |

FIG1

S1: The seller starts to provide the collateral

↓

S2: Get the seller's credit balance

↓

S3: collateral value > credit balance?

Yes ↓

S4: Get the collateral value from a third-party valuation report

No

↓

S5: Set 50% of the collateral value as the seller's collateral limit

FIG 2

S1: Collateral is sold out?

Yes

No

No

S2: Trade price > 50% of the collateral value?

Yes

No

S5: One month later, force the collateral to be cut by 10%.

S3: Get an amount of trade currency which is the difference between trade price and 50% of the collateral value and transfer the same to the buyer's trade currency balance.

S4: The seller supplements the difference between 50% of the collateral value and the trade price.

S6: Collateral has been waiting for sale for >= one year?

Yes

S7: Revoke the collateral and return 50% of the collateral value to the platform.

S8: End.

FIG3

S1: Set the user's credit limit.

S2: The user's credit balance < credit limit?

Yes

S3: Full repayment on time?

No

S4: Any extension requested?

No

Yes

S5: Full repayment upon the extension expires?

No

Yes

Yes

S6: Credit limit is set as zero, default amount is supplemented by the platform.

S7: Credit limit remains unchanged.

FIG 4

# INTERNATIONAL SEARCH REPORT

| International application No. |
|---|
| PCT/CN2016/080334 |

### A. CLASSIFICATION OF SUBJECT MATTER

G06Q 30/06 (2012.01) i

According to International Patent Classification (IPC) or to both national classification and IPC

### B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, EPODOC, WPI, CNKI: currency, money, goods, barter, deal, exchange, trade, buy, credit, overdraft, bonded, mortgage, account, finance, electronic money

### C. DOCUMENTS CONSIDERED TO BE RELEVANT

| Category* | Citation of document, with indication, where appropriate, of the relevant passages | Relevant to claim No. |
|---|---|---|
| X | CN 104063829 A (KONG, Qingfa) 24 September 2014 (24.09.2014) description, paragraphs [0002]-[0015], and [0025]-[0043] | 1-15 |
| A | CN 104899672 A (TENCENT TECHNOLOGY SHENZHEN CO., LTD.) 09 September 2015 (09.09.2015) the whole document | 1-15 |
| A | CN 104867047 A (CHANGSHA HIGH-TECH ZONE GUYULAN FOOTHILL ROAD NO.2) 26 August 2015 (26.08.2015) the whole document | 1-15 |
| A | CN 105005903 A (HU, Ping) 28 October 2015 (28.10.2015) the whole document | 1-15 |
| A | CN 103295126 A (LIU, Jiakun) 11 September 2013 (11.09.2013) the whole document | 1-15 |
| A | WO 2007016138 A2 (JPMORGAN CHASE BANK, N. A. et al.) 08 February 2007 (08.02.2007) the whole document | 1-15 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 January 2017 | 26 January 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer SUN, Juan Telephone No. (86-10) 62413714 |
|---|---|

Form PCT/ISA/210 (second sheet) (July 2009)

## INTERNATIONAL SEARCH REPORT
### Information on patent family members

| | International application No. |
|---|---|
| | PCT/CN2016/080334 |

| Patent Documents referred in the Report | Publication Date | Patent Family | Publication Date |
|---|---|---|---|
| CN 104063829 A | 24 September 2014 | None | |
| CN 104899672 A | 09 September 2015 | WO 2015185018 A1 | 10 December 2015 |
| CN 104867047 A | 26 August 2015 | None | |
| CN 105005903 A | 28 October 2015 | None | |
| CN 103295126 A | 11 September 2013 | None | |
| WO 2007016138 A2 | 08 February 2007 | US 2007027799 A1 | 01 February 2007 |

Form PCT/ISA /210 (patent family annex) (July 2009)